# EUROPEAN PATENT SPECIFICATION

(11) **EP 3 166 098 B1**
(45) Date of publication and mention of the grant of the patent: **23.09.2020**
(21) Application number: 14896349.9
(22) Date of filing: 01.10.2014
(51) Int. Cl.: G09G 3/20, G02F 1/133

(54) **PIXEL ARRAY AND DRIVING METHOD THEREOF AND DISPLAY PANEL**
PIXELANORDNUNG UND ANSTEUERUNGSVERFAHREN DAFÜR SOWIE ANZEIGETAFEL
MATRICE DE PIXELS ET SON PROCÉDÉ DE PILOTAGE, ET ÉCRAN D'AFFICHAGE

(30) Priority: 04.07.2014 CN 201410317831
(43) Date of publication of application: 10.05.2017
(73) Proprietor: BOE Technology Group Co., Ltd., Beijing 100015 (CN); Beijing BOE Optoelectronics Technology Co., Ltd., Beijing 100176 (CN)
(72) Inventor: GUO, Renwei, Beijing 100176 (CN); DONG, Xue, Beijing 100176 (CN); YANG, Shengji, Beijing 100176 (CN); SHI, Lingyun, Beijing 100176 (CN)
(74) Representative: Klunker IP Patentanwälte PartG mbB
(86) International application number: PCT/CN2014/088084
(87) International publication number: WO 2016/000343

(56) References cited:
- EP-A1- 3 163 557
- WO-A1-2014/014032
- CN-A- 101 393 366
- CN-A- 101 937 155
- CN-A- 102 073 175
- CN-A- 102 073 175
- CN-A- 103 777 393
- CN-A- 103 777 393
- CN-A- 103 778 882
- CN-A- 103 824 520
- CN-A- 103 886 809
- CN-A- 103 903 524
- CN-A- 104 036 701
- CN-U- 204 029 329
- GB-A- 2 320 790
- JP-A- 2012 133 011
- KR-A- 20040 046 452
- US-A- 5 311 337
- US-A1- 2007 070 093
- US-A1- 2013 010 235

## Description

### TECHNICAL FIELD

The present invention relates to a pixel array and a driving method thereof and a display panel.

### BACKGROUND

In a current display panel, the common pixel design is that three sub-pixels (including a red (R) sub-pixel, a green (G) sub-pixel and a blue (B) sub-pixel) or four sub-pixels (an R sub-pixel, a G sub-pixel, a B sub-pixel and a white (W) sub-pixel) are combined to form a pixel unit for display.

EP 3 163 557 A1 discloses a display panel, a display method and a display device. The display panel comprises sub pixel units of red (R), green (G), blue (B) and one other color (X), wherein the sub pixel units are arranged into a sub pixel unit array, the sub pixel units in the sub pixel unit array are all cross shaped. The cross shape is constructed with rectangles with an aspect ratio of 3:1 in transverse and longitudinal directions and has equal lengths in the transverse and longitudinal directions. Respective sub pixel units in the sub pixel unit array are interlaced with each other sequentially and arranged periodically.

JP 2012 133011 A discloses a multi-screen display device capable of simultaneously displaying different images in accordance with view angles along three or more directions out of four directions of right, left, up and down. Each of a plurality of pixels included in a display screen of a liquid crystal display (LCD) device is in a cross shape on a plan view and includes four sub-pixels. A parallax barrier formed on a counter substrate on a side of liquid crystal opposingly to each pixel has an opening in the vicinity of a center of the pixel. The sub-pixels are disposed around the opening, so that different images may be simultaneously displayed through the opening in a prescribed view angle range along four directions of right, left, up and down on the display screen.

CN 102073175A discloses a LCD panel and a LCD device. The LCD panel comprises: a first substrate and a second substrate opposite to the first substrate; liquid crystal molecules sandwiched between the first substrate and the second substrate; a transparent electrode layer arranged on one side of the first substrate close to the liquid crystal molecules; a plurality of sub-pixel electrodes arranged on one side of the second substrate close to the liquid crystal molecules. Each sub-pixel electrode comprises a polygonal display area. At least two sides of display areas of adjacent sub-pixel electrodes are adjacent. Each sub-pixel electrode and the transparent electrode layer form a liquid crystal capacitor. The voltage polarity of each sub-pixel electrode relative to the transparent electrode layer of the first substrate is opposite to that of an adjacent sub-pixel electrode relative to the transparent electrode layer of the first substrate.

KR 2004 0046452 A discloses an AC type plasma display panel having a cross type cell structure. The AC type plasma display comprises: a lower substrate, a top substrate, and a plurality of cells. A barrier rib and an entry electrode are formed on the lower substrate. A bus electrode arranged in vertical direction and a transparent electrode are formed on the top substrate. The cells are defined by the barrier rib. The cells include an up and down protrusion unit and a left and right protrusion unit and are formed with a cross type.

WO 2014/014032 A1 discloses a LCD device equipped with a first substrate, a second substrate, a liquid crystal layer and a columnar spacer. The first substrate is provided with a pixel electrode, a TFT and an interlayer insulation layer, and the second substrate is provided with first, second and third color filters arranged in a delta configuration. Each pixel has a substantially n-gon form (n represents an integer of 8 or greater) or a substantially circular form. The TFT and the columnar spacer are arranged in a first three colors boundary area (i.e., a first area located at the boundary of three colors), and a contact hole of the interlayer insulation layer is arranged in a second three colors boundary area (i.e., a second area located at the boundary of the three colors). Two among three pixels (R, G, B) that define the first three colors boundary area are the same as two among three pixels that define the second three colors boundary area, and the other pixel among the three pixels that define the first three colors boundary area is located at a position different from that of the other among the three pixels that define the second three colors boundary area.

CN 101 393 366 A discloses a pixel, a pixel module, and a LCD panel. The LCD panel is composed of a pixel module distributed in a honeycomb shape. The pixel module is composed of three sub-pixels of red, green and blue. The three sub-pixels of red, green, and blue are respectively a regular hexagon, and all the sub-pixels in the pixel module are arranged in a honeycomb shape, and none of six sub-pixels adjacent to each sub-pixel has the same color as the sub-pixel. A unique pixel structure and a pixel module structure are provided, and based on the unique structure, the number of source driver channels required for the pixels on the panel is reduced, and the gate driver channels that is required to be added is minimized.

US 2007/070093 A1 discloses an active matrix substrate including a substrate, a plurality of scan lines, a plurality of data lines and a plurality of sub-pixels. The scan lines and the data lines are disposed on the substrate and define a plurality of sub-pixel regions distributed in a delta arrangement. The sub-pixels corresponding to the sub-pixel regions are disposed on the substrate. The sub-pixels are electrically connected with corresponding scan lines and corresponding data lines. Between two sub-pixel regions corresponding to any two adjacent sub-pixels at a same side of one scan line, there are two data lines. Each sub-pixel includes an active device and a pixel electrode. The active device is electrically connected with a corresponding scan line and a corresponding data line. The pixel electrode is electrically connected with the active device and extends from the sub-pixel region corresponding to the sub-pixel to a position over the data line.

GB 2320790A discloses an offset pixel arrangement. The pixels of a structure are arranged in rows in a first direction, each pixel being made up of three color filter sub-pixels. The sub-pixels are arranged in a predetermined order RGB in the direction perpendicular to the length of the rows. The pixels in one row are offset by a predetermined distance from the pixels in an adjacent row. Also disclosed is a system for driving the LCD device whereby the driving frame is divided into first, second and third sub-frames with each sub-frame driving one of the sub-pixel colors.

CN 103 777 393 A discloses a display panel, a display method of the display panel, and a display device. The display panel comprises a plurality of circulating units, wherein each circulating unit is composed of two rows of sub-pixels, each row of sub-pixels comprises a red sub-pixel, a green sub-pixel and a blue sub-pixel, the two rows of sub-pixels of each circulating unit are staggered at the interval of half of a sub-pixel, and the arrangement modes of the two rows of sub-pixels of each circulating unit are different. The display method of the display panel comprises the steps that initial components of the sub-pixels are determined according to a picture needing displaying; the display component of each sub-pixel is determined according to the initial component of the sub-pixel and the initial components of public sub-pixels of the sub-pixel, wherein a plurality of sub-pixels, with the color same to the color of the sub-pixel, around the sub-pixel serve as the public sub-pixels of the sub-pixel.

CN 103 886 809 A discloses a display method and a display device. A display panel using the display method comprises a plurality of rows of secondary pixels; each row of secondary pixels is formed by secondary pixels with a plurality of colors circularly in turns; the arraying sequences of the secondary pixels in each row are the same; and the secondary pixels with the same color are not adjacent to one another in the row direction. The display method comprises the following steps of (S1) generating an original image which consists of virtual pixels arrayed into a matrix according to image information; and (S2) calculating display components of various secondary pixels by using original components of sampling virtual secondary pixels of various secondary pixels. Each virtual pixel consists of virtual secondary pixels with a plurality of colors, and the sizes of the virtual pixels are the same with those of secondary pixels of a display panel. A sampling virtual secondary pixel of a secondary pixel comprises a plurality of virtual secondary pixels with a plurality of colors, and the virtual secondary pixels are adjacent to the secondary pixel.

CN 103 903 524 A disclosed a display method. The display method is applicable to a display panel comprising multiple rows of sub-pixels, every two adjacent sub-pixels in the line direction are different in colors, and the distance between every two adjacent sub-pixels is 1/2 sub-pixel in the row direction. The display method includes the steps of S1, generating an initial image formed by virtual pixel matrixes; S2, mapping each virtual pixel to a sampling position, wherein each row of virtual pixels is sequentially and continuously mapped to each row of sampling positions; S3, calculating the display component of each sub-pixel according to the initial component of the corresponding color of the virtual pixel corresponding to each sub-pixel. The display method is especially applicable to high-resolution display.

### SUMMARY

It is an object of the present invention to provide a pixel array, a driving method thereof and a display panel. When the driving method is used for driving the pixel array for display, the display panel can obtain high visual resolution.

The object is achieved by the features of the respective independent claims. Further embodiments are defined in the corresponding dependent claims.

### BRIEF DESCRIPTION OF THE DRAWINGS

FIG. 1 is a schematic diagram of a first embodiment of a pixel array provided by an embodiment of the present disclosure;
FIG. 2 is a schematic diagram of two pixel units in the pixel array as illustrated in FIG. 1;
FIG. 3 is a schematic diagram of a second arrangement of a pixel array that does not form part of the invention and is referred as second embodiment in the present disclosure.
FIG. 4 is a schematic diagram illustrating the connection relationship between gate lines, data lines and sub-pixels in the display panel provided by an embodiment of the present disclosure;
FIG. 5 is a schematic diagram illustrating signal inversion in the display panel provided by an embodiment of the present disclosure;
FIG. 6 is a schematic diagram illustrating the share relationship between sub-pixels of three colors when the pixel array is driven by the driving method provided by the embodiment of the present disclosure;
FIG. 7 is a schematic diagram illustrating the share relationship between R sub-pixels when the pixel array is driven by the driving method provided by an embodiment of the present disclosure;
FIG. 8 is a schematic diagram illustrating the share relationship between B sub-pixels when the pixel array is driven by the driving method provided by an embodiment of the present disclosure;
FIG. 9 is a schematic diagram illustrating the share relationship between G sub-pixels when the pixel array is driven by the driving method provided by an embodiment of the present disclosure;
FIG. 10 is an arrangement diagram of red output areas when the pixel array provided by the embodiment of the present disclosure outputs red;
FIG. 11 is an arrangement diagram of blue output areas when the pixel array provided by the embodiment of the present disclosure outputs blue; and
FIG. 12 is an arrangement diagram of green output areas when the pixel array provided by the embodiment of the present disclosure outputs green.

### DETAILED DESCRIPTION

It should be understood that in connection with the accompanying drawings, "R" represents red, "G" representing green, and "B" representing blue.

The inventors of the application have noted that the physical resolution and the visual resolution of a display panel are equal to each other when pixel units adopt the common pixel design of three sub-pixels or four sub-pixels. When the viewing experience requirement of users on display screens is increased, higher visual resolution is required, and hence the pixel per inch (PPI) of display panels would be increased. Due to the increased PPI of display panels, the process for manufacturing a display panel becomes more difficult. Therefore, those skilled in the art wish to increase the visual resolution of display panels without increasing the difficulty of the manufacturing process.

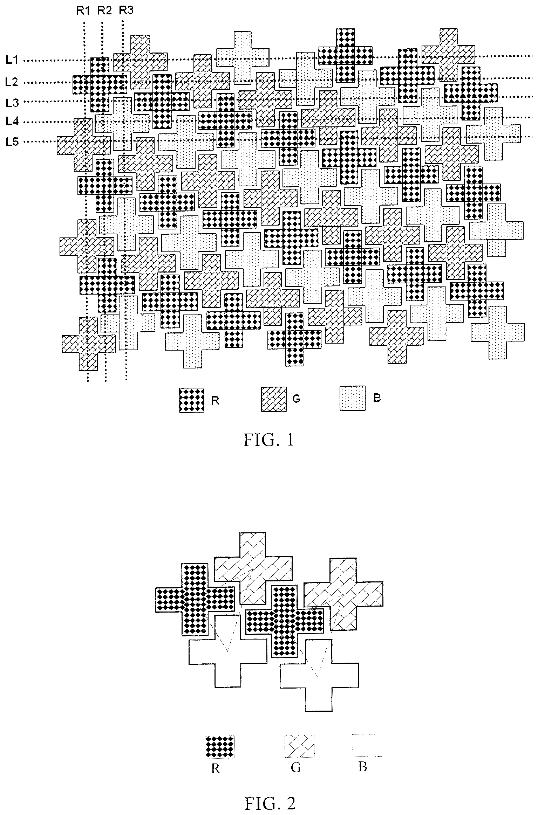

In one aspect, as illustrated in FIGS. 1 to 3, at least one embodiment of the present disclosure provides a pixel array. The pixel array comprises a plurality of pixel units. Each pixel unit includes three sub-pixels of different colors. The three sub-pixels are respectively an R sub-pixel, a G sub-pixel, and a B sub-pixel. In each pixel unit, a triangle is obtained by lines of connecting center points of the three sub-pixels (as illustrated in FIG. 2); each sub-pixel is in a shape of crisscross; the crisscross is formed by rectangles with the length-width ratio of 3:1 in the horizontal direction and the vertical direction respectively; and the length of the crisscross in the horizontal direction is equal to the length of the crisscross in the vertical direction.

As each sub-pixel is in a shape of crisscross, the sub-pixels in the pixel array can be tightly arranged, so that the display panel comprising the pixel array can have high physical resolution. When the pixel array is driven by the driving method provided by an embodiment of the present disclosure, the brightness output area of the pixel array can be larger, and hence the visual resolution of the display panel comprising the pixel array can be higher than the physical resolution of the display panel comprising the pixel array.

Because a triangle is formed by the connecting lines of the center points of the three sub-pixels in each pixel unit (as illustrated in FIGS. 1 and 2), the sub-pixels of different colors in the pixel array can be more uniformly distributed.

It should be understood that in the pixel array provided by the embodiment of the present disclosure, the sub-pixels are tightly arranged to improve the resolution of the display panel comprising the pixel array as much as possible.

In order to provide signals for the sub-pixels in the pixel array conveniently, in the first embodiment of the pixel array provided by the embodiment of the present disclosure, as illustrated in FIG. 1, a sub-pixel period is formed by five rows of sub-pixels. The first row of sub-pixels in the sub-pixel period include a plurality of first sub-pixel sub-periods; each first sub-pixel sub-period includes a G sub-pixel, a B sub-pixel and an R sub-pixel arranged in sequence; the second row of sub-pixels in the sub-pixel period include a plurality of second sub-pixel sub-periods; each second sub-pixel sub-period includes an R sub-pixel, a G sub-pixel and a B sub-pixel arranged in sequence; the third row of sub-pixels in the sub-pixel period include a plurality of third sub-pixel sub-periods; each third sub-pixel sub-period includes an R sub-pixel, a G sub-pixel and a B sub-pixel arranged in sequence; the fourth row of sub-pixels in the sub-pixel period include a plurality of fourth sub-pixel sub-periods; each fourth sub-pixel sub-period includes a B sub-pixel, an R sub-pixel and a G sub-pixel arranged in sequence; the fifth row of sub-pixels in the sub-pixel period include a plurality of fifth sub-pixel sub-periods; and each fifth sub-pixel sub-period includes a G sub-pixel, a B sub-pixel and an R sub-pixel arranged in sequence.

It should be understood that in the embodiment of the present disclosure, a "row of sub-pixels" refers to sub-pixels of which center points are disposed on the same row; and in the embodiment of the present disclosure, a column of sub-pixels refers to sub-pixels of which center points are disposed on the same column.

In the pixel array provided by the first embodiment, the mutual positional relationship among the plurality of sub-pixels is defined as follows:

A horizontal axis and a vertical axis are provided on a plane; horizontal coordinates x = R(1), R(2), R(3) ··· R(N) are sequentially arranged from left to right; the distance between adjacent horizontal coordinates is d; vertical coordinates y = L(1), L(2), L(3) ··· L(n) are sequentially arranged from the top down; the distance between adjacent vertical coordinates is also d, namely the distance between the adjacent horizontal coordinates is equal to the distance between the adjacent vertical coordinates; and the horizontal coordinates of the sub-pixels are as follows:
as for an L(1+5i₁)^{th} row, centers of the sub-pixels are disposed at positions, the horizontal coordinates of which are R(4+5k₁), i₁ being an integer not less than zero, and k₁ being an integer not less than zero;
as for an L(2+5i₂)^{th} row, centers of the sub-pixels are disposed at positions, the horizontal coordinates of which are R(2+5k₂), i₂ being an integer not less than zero, and k₂ being an integer not less than zero;
as for an L(3+5i₃)^{th} row, centers of the sub-pixels are disposed at positions, the horizontal coordinates of which are R(5+5k₃), i₃ being an integer not less than zero, and k₃ being an integer not less than zero;
as for an L(4+5i₄)^{th} row, centers of the sub-pixels are disposed at positions, the horizontal coordinates of which are R(3+5k₄), i₄ being an integer not less than zero, and k₄ being an integer not less than zero; and
as for an L(5+5i₅)^{th} row, centers of the sub-pixels are disposed at positions, the horizontal coordinates of which are R(1+5k₅), i₅ being an integer not less than zero, and k₅ being an integer not less than zero.

Taking FIG. 1 as an example, the horizontal coordinates of the centers of the L(1)^{th} row (namely i₁=0) of sub-pixels are sequentially R(4) (k₁=0), R(9) (k₁=1), R(14) (k₁=2) and R(19) (k₁=3); the horizontal coordinates of the centers of the L(2)^{th} row (namely i₂=0) of sub-pixels are sequentially R(2) (k₂=0), R(7) (k₂=1), R(12) (k₂=2) and R(17) (k₂=3); the horizontal coordinates of the centers of the L(3)^{th} row (namely i₃=0) of sub-pixels are sequentially R(5) (k₃=0), R(10) (k₃=1), R(15) (k₃=2) and R(20) (k₃=3); the horizontal coordinates of the centers of the L(4)^{th} row (namely i₄=0) of sub-pixels are sequentially R(3) (k₄=0), R(8) (k₄=1), R(13) (k₄=2) and R(18) (k₄=3); and the horizontal coordinates of the centers of the L(5)^{th} row (namely i₅=0) of sub-pixels are sequentially R(1) (k₄=0), R(6) (k₄=1), R(11) (k₄=2) and R(16) (k₄=3).

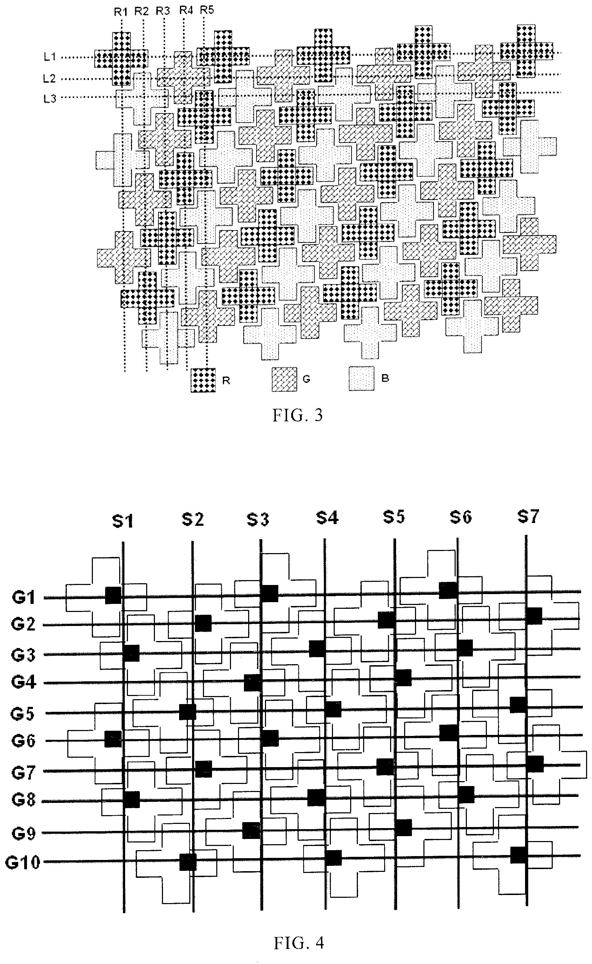

In the second embodiment of the pixel array provided by the embodiment of the present disclosure, the pixel array may have the array as illustrated in FIG. 3. That is to say, as illustrated in FIG. 3, a sub-pixel period is formed by three rows of sub-pixels; the first row of sub-pixels in the sub-pixel period are all R sub-pixels; the second row of sub-pixels in the sub-pixel period are all B sub-pixels; and the third row of sub-pixels in the sub-pixel period are all G sub-pixels.

In the pixel array provided by the second embodiment, the mutual positional relationship among the plurality of sub-pixels is defined as follows:

A horizontal axis and a vertical axis are provide on a plane; horizontal coordinates x = R(1), R(2), R(3) ... R(N) are sequentially arranged from left to right; the distance between adjacent horizontal coordinates is d; vertical coordinates y = L(1), L(2), L(3) ··· L(n) are sequentially arranged from the top down; the distance between adjacent vertical coordinates is also d, namely the distance between the adjacent horizontal coordinates is equal to the distance between the adjacent vertical coordinates; and the horizontal coordinates of the sub-pixels are as follows:
as for an L(1+5m₁)^{th} row, centers of the sub-pixels are disposed at positions, the horizontal coordinates of which are R(1+5n₁), m₁ being an integer not less than zero, n₁ being an integer not less than zero;
as for an L(2+5m₂)^{th} row, centers of the sub-pixels are disposed at positions, the horizontal coordinates of which are R(4+5n₂), m₂ being an integer not less than zero, n₂ being an integer not less than zero;
as for an L(3+5m₃)^{th} row, centers of the sub-pixels are disposed at positions, the horizontal coordinates of which are R(2+5n₃), m₃ being an integer not less than zero, n₃ being an integer not less than zero;
as for an L(4+5m₄)^{th} row, centers of the sub-pixels are disposed at positions, the horizontal coordinates of which are R(5+5n₄), m₄ being an integer not less than zero, n₄ being an integer not less than zero; and
as for an L(5+5m₅)^{th} row, centers of the sub-pixels are disposed at positions, the horizontal coordinates of which are R(3+5n₅), m₅ being an integer not less than zero, n₅ being an integer not less than zero.

Taking FIG. 3 as an example, the horizontal coordinates of the centers of the L(1)^{th} row (namely m₁=0) of sub-pixels are sequentially R(1) (n₁=0), R(6) (n₁=1), R(11) (n₁=2) and R(16) (n₁=3); the horizontal coordinates of the centers of the L(2)^{th} row (namely m₂=0) of sub-pixels are sequentially R(4) (n₂=0), R(9) (n₂=1), R(14) (n₂=2) and R(19) (n₂=3); the horizontal coordinates of the centers of the L(3)^{th} row (namely m₃=0) of sub-pixels are sequentially R(2) (n₃=0), R(7) (n₃=1), R(12) (n₃=2) and R(17) (n₃=3); the horizontal coordinates of the centers of the L(4)^{th} row (namely m₄=0) of sub-pixels are sequentially R(5) (n₃=0), R(10) (n₃=1), R(15) (n₃=2) and R(20) (n₃=3); and the horizontal coordinates of the centers of the L(5)^{th} row (namely m₅=0) of sub-pixels are sequentially R(3) (n₃=0), R(8) (n₃=1), R(13) (n₃=2) and R(18) (n₃=3).

In another aspect, at least one embodiment of the present disclosure provides a display panel. The display panel comprises a pixel array, a plurality of data lines and a plurality of gate lines. The pixel array is the pixel array provided by an embodiment of the present disclosure.

The data lines are used for providing gray-scale signals for the sub-pixels in the pixel array, and the gate lines are used for providing scanning signals for the sub-pixels in the pixel array. As illustrated in FIG. 4, the same row of sub-pixels share one gate line. Therefore, the pixel array provided by an embodiment of the present disclosure also adopts a progressive scanning manner. The figure illustrates 10 gate lines from G1 to G10.

In the embodiment of the present disclosure, the specific type of the display panel is not specially limited. For instance, the display panel may be an OLED panel and may also be an LCD panel, etc. If the display panel is an OLED panel, each sub-pixel in the pixel array corresponds to a light-emitting member in the display panel. If the display panel is an LCD panel, the sub-pixel corresponds to an opening on the display panel; common electrodes or pixel electrodes of the display panel may be cross-shaped; and color filters on a color filter substrate are also cross-shaped.

In an embodiment of the present disclosure, as the sub-pixels are tightly arranged, the spacing between center points of two adjacent columns of sub-pixels is relatively small. For the convenient arrangement of the data lines, two columns of sub-pixels may be disposed above one data line. Of course, the embodiment of the present disclosure is not limited thereto. For instance, one column of sub-pixels may also be disposed above one data line, so that the sub-pixels in the pixel array can all receive gray-scale signals.

As illustrated in FIG. 4, a data line S1 is configured to provide gray-scale signals (namely brightness signals) for sub-pixels corresponding to a gate line G1, a gate line G3, a gate line G6, and a gate line G8; a data line S2 is configured to provide gray-scale signals for sub-pixels corresponding to a gate line G2, a gate line G5, a gate line G7, and a gate line G10; a data line S3 is configured to provide gray-scale signals for sub-pixels corresponding to the gate line G1, a gate line G4, the gate line G6, and a gate line G9; a data line S4 is configured to provide gray-scale signals for sub-pixels corresponding to the gate line G3, the gate line G5, the gate line G8, and the gate line G10; a data line S5 is configured to provide gray-scale signals for sub-pixels corresponding to the gate line G2, the gate line G4, the gate line G7, and the gate line G9; a data line S6 is configured to provide gray-scale signals for sub-pixels corresponding to the gate line G1, the gate line G3, the gate line G6, and the gate line G8; and a data line S7 is configured to provide gray-scale signals for sub-pixels corresponding to the gate line G2, the gate line G5, the gate line G7, and the gate line G10.

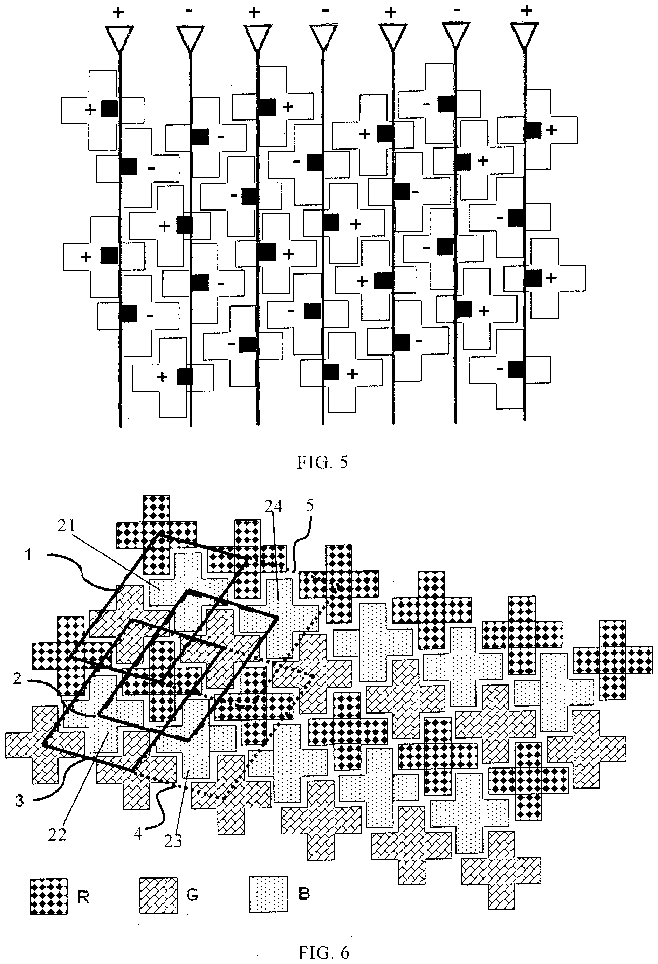

As described above, the display panel may be an LCD panel. As the sub-pixels are cross-shaped, the sub-pixels in two adjacent rows of sub-pixels are respectively disposed in different columns. Therefore, in one embodiment, as illustrated in FIG. 5, in the LCD panel, signal inversion may be introduced by way of point inversion. That is to say, in a case where the display panel is used for display, voltage signals provided by two adjacent data lines have opposite polarities, so that the voltage formed between a common electrode and a pixel electrode has opposite polarities between two sub-pixels in two adjacent rows and above the same data line.

In still another aspect, at least one embodiment of the present disclosure further provides a method for driving the pixel array. In the method for driving the pixel array, as illustrated in FIGS. 1 to 3, the pixel array includes a plurality of real sub-pixel units; each real sub-pixel unit includes three real sub-pixels of different colors; the three real sub-pixels are respectively a real R sub-pixel, a real G sub-pixel and a real B sub-pixel; in each pixel unit, a triangle is formed by connecting lines of center points of the three real sub-pixels; and each real sub-pixel is cross-shaped. The driving method comprises the following steps S1 to S3. Detailed description will be given below to the steps S1 to S3.
S1: dividing an image to be displayed into a plurality of theoretical pixel units, in which each theoretical pixel unit includes three theoretical sub-pixels of different colors, and the three theoretical sub-pixels are respectively a theoretical R sub-pixel, a theoretical G sub-pixel and a theoretical B sub-pixel (for instance, parallelogrammic regions 1, 2, 3 as illustrated in FIG 6 represent the theoretical R sub-pixels, the theoretical B sub-pixels and the theoretical G sub-pixels respectively); and calculating the theoretical brightness value of each theoretical sub-pixel.
S2: calculating actual brightness values of the real sub-pixels, in which the brightness value of a real sub-pixel to be calculated is the sum of at least a part of the theoretical brightness value of the theoretical sub-pixel corresponding to the real sub-pixel to be calculated and a part of the theoretical brightness value of a theoretical sub-pixel corresponding to at least one sharing real sub-pixel; the sharing real sub-pixel has the same color as the real sub-pixel to be calculated; and a connecting line of center points of the sharing real sub-pixel and the real sub-pixel to be calculated does not run through other real sub-pixels having the same color as the real sub-pixel to be calculated.
S3: inputting signals into the real sub-pixels, so that the real sub-pixels have the actual brightness value calculated in the step S2.

The shape of the theoretical pixel unit may be the same as that of a pixel unit in a common pixel array. For instance, the theoretical pixel unit may be of a square, and a plurality of theoretical pixel units are arranged into a matrix including a plurality of rows and a plurality of columns.

In the driving method provided by an embodiment of the present disclosure, the size of the theoretical pixel unit is not specifically limited in the step S1 as long as the theoretical sub-pixel in the theoretical pixel unit may correspond to the real sub-pixel. Detailed description will be given below with respect to the phrase "theoretical sub-pixel corresponding to the real sub-pixel to be calculated" in the step S2. Position coordinates of center points of the theoretical sub-pixels in the theoretical pixel units in an image to be displayed may be calculated, and hence position coordinates of center points of the real sub-pixels in the image to be displayed may be calculated. If the position coordinates of the center points of the real sub-pixels are close to or overlapped with the position coordinates of the center points of the theoretical sub-pixels, it is deemed that the position of the real sub-pixel corresponds to that of the theoretical sub-pixel.

If the pixel array provided by the embodiment of the present disclosure is driven by the driving method provided by an embodiment of the present disclosure, the actual brightness of each real sub-pixel includes at least a part of the theoretical brightness value of a theoretical sub-pixel corresponding to the real sub-pixel and a part of the theoretical brightness value of theoretical sub-pixel(s) corresponding to the sharing real sub-pixel(s), and the effect is equivalent to the case that, when one real sub-pixel outputs a brightness, it shares the brightness value of the real sub-pixels surrounding this real sub-pixel. Therefore, the visual resolution of the display panel comprising the pixel array can be higher than the physical resolution thereof, and more information can be outputted through sharing between real sub-pixels.

As described above, the sharing real sub-pixel used in the process of calculating the actual brightness value of a real sub-pixel includes the real sub-pixel having the same color as the real sub-pixel to be calculated, and a connecting line of center points of the sharing real sub-pixel and the real sub-pixel to be calculated does not run through other real sub-pixels having the same color as the real sub-pixel to be calculated. In the process of calculating the actual brightness of a real sub-pixel, the brightness value of one sharing real sub-pixel may be utilized, or the brightness value of a plurality of sharing real sub-pixels may also be utilized.

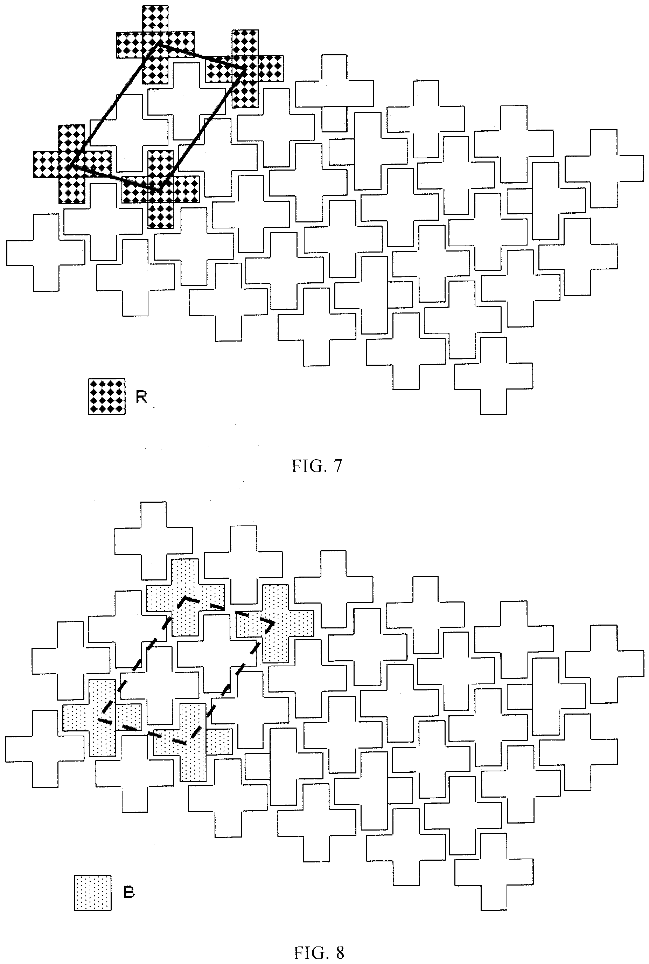

In one embodiment of the present disclosure, in the step S2, connecting lines of a center point of the real sub-pixel to be calculated and center points of the sharing real sub-pixels corresponding to the real sub-pixel to be calculated may form a parallelogrammic, as illustrated in FIGS. 6 to 12. The embodiments of the present disclosure are not limited thereto.

Detailed description will be given below to the step S2 with reference to FIG. 6 by taking the case that the connecting lines of the center points of the real sub-pixel to be calculated and the sharing real sub-pixels forms a parallelogrammic and the brightness value of a plurality of sharing real sub-pixels is utilized in the process of calculating the actual brightness value of a real sub-pixel as an example.

For instance, a real B sub-pixel 21 in FIG. 6 is a real sub-pixel to be calculated. As real B sub-pixels 22, 23 and 24 have the same color as the real B sub-pixel 21 and connecting lines of center points of the real B sub-pixels 21, 22, 23 and 24 do not run through other real B sub-pixels, the real B sub-pixels 22, 23 and 24 are the sharing real sub-pixels. The theoretical sub-pixel corresponding to the real B sub-pixel 21 to be calculated may be the theoretical sub-pixel represented by the parallelogram 1 (referred to as a theoretical sub-pixel 1), and the theoretical sub-pixels corresponding to the sharing real sub-pixels 22, 23 and 24 may be the theoretical sub-pixels represented by parallelograms 3, 4 and 5 (referred to as theoretical sub-pixels 3, 4 and 5 respectively). Taking the case that the real B sub-pixel 21 to be calculated utilizes all the sharing real sub-pixels 22, 23 and 24 as an example, the brightness value of the real B sub-pixel 21 to be calculated includes: at least a part of the theoretical brightness value of the theoretical sub-pixel 1 and a part of the theoretical brightness value of the theoretical sub-pixels 3, 4 and 5. For instance, the calculated brightness value of the real B sub-pixel 21 may be the brightness value of a polygonal region encircled by the parallelograms 1, 2 and 3 (namely a region encircled by solid lines in FIG. 6). Of course, the embodiment of the present disclosure is not limited thereto.

As illustrated in FIG. 6, connecting lines of a center point of a real R sub-pixel to be calculated and center points of sharing real sub-pixels of the R sub-pixel to be calculated are combined to form a first parallelogram 1; connecting lines of a center point of a real B sub-pixel to be calculated and center points of sharing real sub-pixels of the B sub-pixel to be calculated are combined to form a second parallelogram 2; and connecting lines of a center point of a real G sub-pixel to be calculated and center points of sharing real sub-pixels of the G sub-pixel to be calculated are combined to form a third parallelogram 3. The first parallelogram 1 is an R output area; the second parallelogram 2 is a B output area; and the third parallelogram 3 is a G output area. Required colors may be obtained by adjusting the brightness of red outputted in the R output area, the brightness of blue outputted in the B output area, and the brightness of green outputted in the G output area.

In the embodiment of the present disclosure, real sub-pixels, outputting brightness actually, in various color output areas are not limited. The real sub-pixel outputting brightness actually may be any one of four real sub-pixels at four vertexes of a color output area. In one embodiment of the present disclosure, in the R output area, the real sub-pixel outputting brightness actually may be a real R sub-pixel on the top in the R output area, and the other three real R sub-pixels are sharing real sub-pixels; in the B output area, the real sub-pixel outputting brightness actually may be a real B sub-pixel on the top in the B output area, and the other three real B sub-pixels are sharing real sub-pixels; and in the G output area, the real sub-pixel outputting brightness actually may be a real G sub-pixel on the top in the G output area, and the other three real G sub-pixels are sharing real sub-pixels.

The pixel array in the method for driving the pixel array, provided by an embodiment of the present disclosure, is the pixel array provided by an embodiment of the present disclosure. Therefore, the real sub-pixels in the pixel array may be arranged according to two embodiments in FIGS. 1 and 3. In the two embodiments as illustrated in FIGS. 1 and 3, real sub-pixels of different colors are alternately arranged, so that the pixel array can be arranged integrally and uniformly, and hence the pixel sharing modes as illustrated in FIGS. 6 to 12 can be achieved (that is to say, connecting lines of a center point of a real sub-pixel to be calculated and center points of sharing real sub-pixels of the real sub-pixel to be calculated are combined to form a parallelogram).

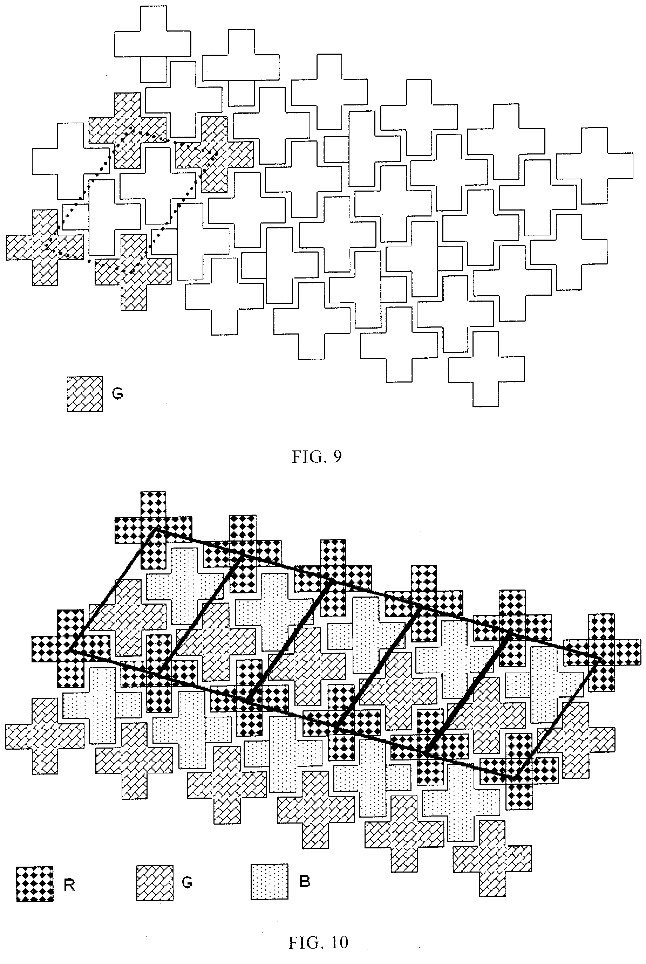

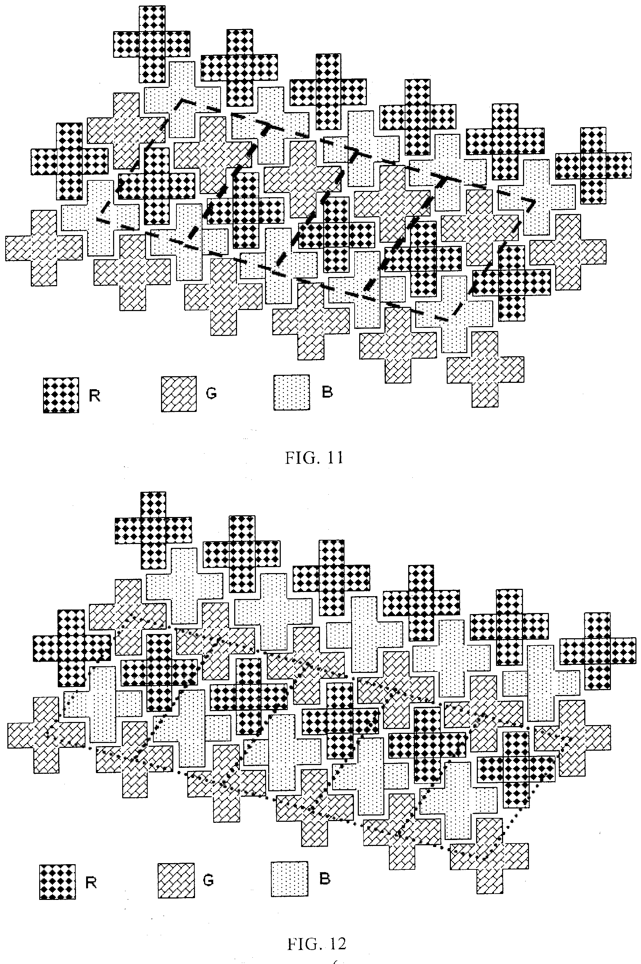

As illustrated in FIGS. 10 to 12, the color output areas are arranged periodically. As illustrated in FIG. 10, a plurality of R output areas are arranged to form a parallelogram, and two adjacent R output areas share one side; as illustrated in FIG. 11, a plurality of B output areas are arranged to form a parallelogram, and two adjacent B output areas share one side; and as illustrated in FIG. 12, a plurality of G output areas are arranged to form a parallelogram, and two adjacent G output areas share one side.

The method for driving the pixel array, provided by the embodiment of the present disclosure, is applicable to the pixel array having the structure as illustrated in FIG. 1. In the pixel array as illustrated in FIG. 1, a sub-pixel period is formed by five rows of sub-pixels. That is to say, in the method for driving the pixel array, provided by the embodiment of the present disclosure, a sub-pixel period is formed by five rows of real sub-pixels in the pixel array. The first row of real sub-pixels in the sub-pixel period include a plurality of first sub-pixel sub-periods; each first sub-pixel sub-period includes a real G sub-pixel, a real B sub-pixel and a real R sub-pixel arranged in sequence; the second row of real sub-pixels in the sub-pixel period include a plurality of second sub-pixel sub-periods; each second sub-pixel sub-period includes a real R sub-pixel, a real G sub-pixel and a real B sub-pixel arranged in sequence; the third row of real sub-pixels in the sub-pixel period include a plurality of third sub-pixel sub-periods; each third sub-pixel sub-period includes a real R sub-pixel, a real G sub-pixel and a real B sub-pixel arranged in sequence; the fourth row of real sub-pixels in the sub-pixel period include a plurality of fourth sub-pixel sub-periods; each fourth sub-pixel sub-period includes a real B sub-pixel, a real R sub-pixel and a real G sub-pixel arranged in sequence; and the fifth row of real sub-pixels in the sub-pixel period include a plurality of fifth sub-pixel sub-periods; and each fifth sub-pixel sub-period includes a real G sub-pixel, a real B sub-pixel and a real R sub-pixel arranged in sequence.

In one embodiment, the mutual positional relationship between the plurality of real sub-pixels in the pixel array as illustrated in FIG 1 is defined as follows:

A horizontal axis and a vertical axis are provide on a plane; horizontal coordinates x=R(1), R(2), R(3) ... R(N) are sequentially arranged from left to right; the distance between adjacent horizontal coordinates is d; vertical coordinates y=L(1), L(2), L(3) ··· L(n) are sequentially arranged from the top down; the distance between adjacent vertical coordinates is also d, namely the distance between the adjacent horizontal coordinates is equal to the distance between the adjacent vertical coordinates; and the horizontal coordinates of the real sub-pixels are as follows:
as for an L(1+5i₁)^{th} row, centers of the real sub-pixels are disposed at positions, the horizontal coordinates of which are R(4+5k₁), i₁ being an integer not less than zero, and k₁ being an integer not less than zero;
as for an L(2+5i₂)^{th} row, centers of the real sub-pixels are disposed at positions, the horizontal coordinates of which are R(2+5k₂), i₂ being an integer not less than zero, and k₂ being an integer not less than zero;
as for an L(3+5i₃)^{th} row, centers of the real sub-pixels are disposed at positions, the horizontal coordinates of which are R(5+5k₃), i₃ being an integer not less than zero, and k₃ being an integer not less than zero;
as for an L(4+5i₄)^{th} row, centers of the real sub-pixels are disposed at positions, the horizontal coordinates of which are R(3+5k₄), i₄ being an integer not less than zero, and k₄ being an integer not less than zero; and
as for an L(5+5i₅)^{th} row, centers of the real sub-pixels are disposed at positions, the horizontal coordinates of which are R(1+5k₅), i₅ being an integer not less than zero, and k₅ being an integer not less than zero.

The method for driving the pixel array, provided by the embodiment of the present disclosure is also applicable to the pixel array as illustrated in FIG. 3. That is to say, in the pixel array in the method for driving the pixel array, provided by the embodiment, a sub-pixel period is formed by three rows of real sub-pixels; the first row of real sub-pixels in the sub-pixel period are all real R sub-pixels; the second row of real sub-pixels in the sub-pixel period are all real B sub-pixels; and the third row of real sub-pixels in the sub-pixel period are all real G sub-pixels.

In one embodiment, the mutual positional relationship between the plurality of real sub-pixels in the pixel array as illustrated in FIG. 3 is defined as follows:
a horizontal axis and a vertical axis are provide on a plane; horizontal coordinates x=R(1), R(2), R(3) ··· R(N) are sequentially arranged from left to right; the distance between adjacent horizontal coordinates is d; vertical coordinates y=L(1), L(2), L(3) ··· L(n) are sequentially arranged from the top down; the distance between adjacent vertical coordinates is also d, namely the distance between the adjacent horizontal coordinates is equal to the distance between the adjacent vertical coordinates; and the horizontal coordinates of the real sub-pixels are as follows:
as for an L(1+5m₁)^{th} row, centers of the real sub-pixels are disposed at positions, the horizontal coordinates of which are R(1+5n₁), m₁ being an integer not less than zero, n₁ being an integer not less than zero;
as for an L(2+5m₂)^{th} row, centers of the real sub-pixels are disposed at positions, the horizontal coordinates of which are R(4+5n₂), m₂ being an integer not less than zero, n₂ being an integer not less than zero;
as for an L(3+5m₃)^{th} row, centers of the real sub-pixels are disposed at positions, the horizontal coordinates of which are R(2+5n₃), m₃ being an integer not less than zero, n₃ being an integer not less than zero;
as for an L(4+5m₄)^{th} row, centers of the real sub-pixels are disposed at positions, the horizontal coordinates of which are R(5+5n₄), m₄ being an integer not less than zero, n₄ being an integer not less than zero; and
as for an L(5+5m₅)^{th} row, centers of the real sub-pixels are disposed at positions, the horizontal coordinates of which are R(3+5ns), m₅ being an integer not less than zero, n₅ being an integer not less than zero.

When the pixel array provided by the embodiment of the present disclosure is driven by the method for driving the pixel array, provided by the embodiment of the present disclosure, the visual resolution of the display panel comprising the pixel array may be higher than the physical resolution of the display panel.

In summary, in the pixel array provided by the embodiment of the present disclosure, the driving method thereof and the display panel, as each sub-pixel is cross-shaped, the sub-pixels in the pixel array may be tightly arranged, so that the display panel comprising the pixel array can have a high physical resolution. When the pixel array is driven by the driving method provided by the embodiment of the present disclosure, the brightness output area of the pixel array can become larger, so that the visual resolution of the display panel comprising the pixel array can be higher than the physical resolution of the display panel comprising the pixel array.

## Claims

1. A pixel array, comprising a plurality of sub-pixels center points of which being arranged in rows, wherein the plurality of sub-pixels comprising a plurality of red, R, sub-pixels, a plurality of green, G, sub-pixels and a plurality of blue, B, sub-pixels;
wherein respective pixel units include three sub-pixels of different colors; the three sub-pixels are respectively one R sub-pixel, one G sub-pixel and one B sub-pixel; in each pixel unit, a triangle is formed by connecting lines of the center points of the three sub-pixels; each of the plurality of sub-pixel has a cross-shape formed by crisscrossing rectangles with a length-width ratio of 3:1 in a horizontal direction and a vertical direction respectively; and a length of the cross-shape in the horizontal direction is equal to a length of the cross-shape in the vertical direction;
**characterized in that**
a mutual positional relationship among sub-pixels is defined as follows:
with reference to a horizontal axis and a vertical axis provide on a plane, horizontal coordinates x = R(1), R(2), R(3), ..., R(N) are sequentially arranged from left to right, vertical coordinates y = L(1), L(2), L(3), ..., L(n) are sequentially arranged from the top down, a distance between adjacent horizontal coordinates is equal to a distance between adjacent vertical coordinates, the horizontal coordinates of the sub-pixels are as follows:
as for an L(1+5i₁)^{th} row, centers of the sub-pixels are disposed at positions, the horizontal coordinates of which are R(4+5ki), ii being an integer not less than zero, and k₁ being an integer not less than zero;
as for an L(2+5i₂)^{th} row, centers of the sub-pixels are disposed at positions, the horizontal coordinates of which are R(2+5k₂), i₂ being an integer not less than zero, and k₂ being an integer not less than zero;
as for an L(3+5i₃)^{th} row, centers of the sub-pixels are disposed at positions, the horizontal coordinates of which are R(5+5k₃), i₃ being an integer not less than zero, and k₃ being an integer not less than zero;
as for an L(4+5i₄)^{th} row, centers of the sub-pixels are disposed at positions, the horizontal coordinates of which are R(3+5k₄), i₄ being an integer not less than zero, and k₄ being an integer not less than zero; and
as for an L(5+5i₅)^{th} row, centers of the sub-pixels are disposed at positions, the horizontal coordinates of which are R(1+5k₅), is being an integer not less than zero, and k₅ being an integer not less than zero; and
a sub-pixel period is formed by five consecutive rows of sub-pixels; wherein
a first row of sub-pixels in the sub-pixel period include a plurality of first sub-pixel sub-periods; each first sub-pixel sub-period include a G sub-pixel, a B sub-pixel and an R sub-pixel arranged in a sequence starting at R(4+i), i being an integer not less than zero;
a second row of sub-pixels in the sub-pixel period include a plurality of second sub-pixel sub-periods; each second sub-pixel sub-period include an R sub-pixel, a G sub-pixel and a B sub-pixel arranged in a sequence starting at R(2+i);
a third row of sub-pixels in the sub-pixel period include a plurality of third sub-pixel sub-periods; each third sub-pixel sub-period include an R sub-pixel, a G sub-pixel and a B sub-pixel arranged in a sequence starting at R(5+i);
a fourth row of sub-pixels in the sub-pixel period include a plurality of fourth sub-pixel sub-periods; each fourth sub-pixel sub-period include a B sub-pixel, an R sub-pixel and a G sub-pixel arranged in a sequence starting at R(3+i); and
a fifth row of sub-pixels in the sub-pixel period include a plurality of fifth sub-pixel sub-periods; and each fifth sub-pixel sub-period include a G sub-pixel, a B sub-pixel and an R sub-pixel arranged in a sequence starting at R(1+i).

2. A display panel, comprising: a pixel array, a plurality of data lines and a plurality of gate lines, wherein the pixel array is the pixel array according to claim 1.

3. The display panel according to claim 2, wherein two columns of sub-pixels are disposed above one data line, wherein a column of sub-pixels referring to sub-pixels of which center points are disposed on the same column.

4. The display panel according to claim 2 or 3, wherein the display panel is a liquid crystal display, LCD, panel or an organic light-emitting diode, OLED, display panel.

5. The display panel according to any one of claims 2 to 4, wherein in a case where the display panel is used for display, voltage signals provided by two adjacent data lines have opposite polarities, so that voltage formed between a common electrode and a pixel electrode has an opposite polarity between two sub-pixels in two adjacent rows and above the same data line.

6. A method for driving the pixel array according to claim 1, wherein the pixel array includes the pixel units as a plurality of real sub-pixel units; wherein the driving method comprises:
S1: dividing an image to be displayed into a plurality of theoretical pixel units, in which each theoretical pixel unit includes three theoretical sub-pixels of different colors, and the three theoretical sub-pixels are respectively a theoretical R sub-pixel, a theoretical G sub-pixel and a theoretical B sub-pixel; and calculating a theoretical brightness value of each theoretical sub-pixel;
S2: calculating actual brightness values of the real sub-pixels, in which a brightness value of a real sub-pixel to be calculated is a sum of at least a part of a theoretical brightness value of a theoretical sub-pixel corresponding to the real sub-pixel to be calculated and a part of a theoretical brightness value of a theoretical sub-pixel corresponding to at least one sharing real sub-pixel; the sharing real sub-pixel has the same color as the real sub-pixel to be calculated; and a connecting line of the sharing real sub-pixel and the real sub-pixel to be calculated does not run through other real sub-pixels having the same color as the real sub-pixel to be calculated; and
S3: inputting signals into the real sub-pixels, so that the real sub-pixels have the actual brightness value calculated in the step S2.

7. The method for driving the pixel array according to claim 6, wherein in the step S2, connecting lines of a center point of the real sub-pixel to be calculated and center points of the sharing real sub-pixels corresponding to the real sub-pixel to be calculated are combined to form a parallelogram.

## Patentansprüche

1. Pixel-Array mit einer Vielzahl von Sub-Pixel-Mittelpunkten, die in Zeilen angeordnet sind, wobei die Vielzahl von Sub-Pixeln aufweist eine Vielzahl von roten, R-, Sub-Pixeln, eine Vielzahl von grünen, G-, Sub-Pixeln und eine Vielzahl von blauen, B-, Sub-Pixeln,
wobei jeweilige Pixel-Einheiten aufweisen drei Sub-Pixel unterschiedlicher Farben; wobei die drei Sub-Pixel jeweils ein R-Sub-Pixel, ein G-Sub-Pixel und ein B-Sub-Pixel sind; wobei in jeder Pixel-Einheit ein Dreieck durch Verbindungslinien der Mittelpunkte der drei Sub-Pixel gebildet wird; wobei jedes der Vielzahl von Sub-Pixeln eine Kreuzform aufweist, die gebildet ist durch sich kreuzende Rechtecke mit einem Längen-Breiten-Verhältnis von 3:1 in einer Horizontalrichtung bzw. einer Vertikalrichtung; und eine Länge der Kreuzform in Horizontalrichtung gleich einer Länge der Kreuzform in Vertikalrichtung ist;
**dadurch gekennzeichnet, dass**
eine gegenseitige Positionsbeziehung unter Sub-Pixeln definiert ist wie folgt:
mit Bezug auf eine Horizontalachse und eine Vertikalachse, die in einer Ebene vorgesehen ist, sind Horizontalkoordinaten x = R(1), R(2), R(3), ... R(N) nacheinander von links nach rechts angeordnet, sind vertikale Koordinaten y = L(1), L(2), L(3), ... L(N) nacheinander von oben nach unten angeordnet, ein Abstand zwischen benachbarten Horizontalkoordinaten gleich einem Abstand zwischen benachbarten Vertikalkoordinaten, sind die Horizontalkoordinaten der Sub-Pixel wie folgt:
was eine L(1+5i₁)-te Reihe anbelangt, sind Mitten der Sub-Pixel an Positionen angeordnet, deren Horizontalkoordinaten R(4+5k₁) sind, wobei i₁ eine ganze Zahl nicht kleiner als Null und k₁ eine ganze Zahl nicht kleiner als Null ist;
soweit es eine L(2+5i₂)-te Zeile anbelangt, sind Mitten der Sub-Pixel an Positionen angeordnet, deren Horizontalkoordinaten R(2+5k₂) sind, wobei i₂ eine ganze Zahl nicht weniger als Null und k₂ eine ganze Zahl nicht weniger als Null ist;
soweit es eine L(3+5i₃)-te Zeile anbelangt, sind Mitten der Sub-Pixel an Positionen angeordnet, deren Horizontalkoordinaten R(5+5k₃) sind, wobei i₃ eine ganze Zahl nicht weniger als Null und k₃ eine ganze Zahl nicht weniger als Null ist;
soweit es eine L(4+5i₄)-te Zeile anbelangt, sind Mitten der Sub-Pixel an Positionen angeordnet, deren Horizontalkoordinaten R(3+5k₄) sind, wobei i₄ eine ganze Zahl nicht weniger als Null und k₄ eine ganze Zahl nicht weniger als Null ist; und
soweit es eine L(5+5i5)-te Zeile anbelangt, sind Mitten der Sub-Pixel an Positionen angeordnet, deren Horizontalkoordinaten R(1+5k₅) sind, wobei is eine ganze Zahl nicht kleiner als Null ist und k₅ eine ganze Zahl nicht kleiner als Null ist; und
eine Sub-Pixel-Periode gebildet wird durch fünf aufeinanderfolgende Zeilen von Sub-Pixeln; wobei
eine erste Zeile Sub-Pixel in der Sub-Pixel-Periode aufweist eine Vielzahl von ersten Sub-Pixel-Sub-Perioden; wobei jede erste Sub-Pixel-Sub-Periode aufweist ein G-Sub-Pixel, ein B-Sub-Pixel und ein R-Sub-Pixel, die in einer Abfolge beginnend bei R(4+i) angeordnet sind, wobei i eine ganze Zahl nicht kleiner als Null ist;
eine zweite Zeile Sub-Pixel in der Sub-Pixel-Periode aufweist eine Vielzahl von zweiten Sub-Pixel-Sub-Perioden; wobei jede zweite Sub-Pixel-Sub-Periode aufweist ein R-Sub-Pixel, ein G-Sub-Pixel und ein B-Sub-Pixel, die in einer Abfolge beginnend bei R(2+i) angeordnet sind;
eine dritte Zeile Sub-Pixel in der Sub-Pixel-Periode aufweist eine Vielzahl von dritten Sub-Pixel-Sub-Perioden; wobei jede dritte Sub-Pixel-Sub-Periode aufweist ein R-Sub-Pixel, ein G-Sub-Pixel und ein B-Sub-Pixel, die in einer Abfolge beginnend bei R(5+i) angeordnet sind;
eine vierte Zeile Sub-Pixel in der Sub-Pixel-Periode aufweist eine Vielzahl von vierten Sub-Pixel-Sub-Perioden; wobei jede vierte Sub-Pixel-Sub-Periode aufweist ein B-Sub-Pixel, ein R-Sub-Pixel und ein G-Sub-Pixel, die in einer Abfolge beginnend bei R(3+i) angeordnet sind; und
eine fünfte Zeile Sub-Pixel in der Sub-Pixel-Periode aufweist eine Vielzahl von fünften Sub-Pixel-Sub-Perioden; wobei jede fünfte Sub-Pixel-Sub-Periode aufweist ein G-Sub-Pixel, ein B-Sub-Pixel und ein R-Sub-Pixel, die in einer Abfolge beginnend bei R(1+i) angeordnet sind.

2. Anzeige-Panel mit: einem Pixel-Array, einer Vielzahl von Datenleitungen und einer Vielzahl von Gate-Leitungen, wobei das Pixel-Array das Pixel-Array gemäß Anspruch 1 ist.

3. Anzeige-Panel gemäß Anspruch 2, wobei zwei Spalten aus Sub-Pixeln über einer Datenleitung angeordnet sind, wobei eine Spalte aus Sub-Pixeln sich auf Sub-Pixel bezieht deren Mittelpunkte auf derselben Spalte angeordnet sind.

4. Anzeige-Panel gemäß Anspruch 2 oder 3, wobei das Anzeige-Panel ein Flüssigkristallanzeige-, LCD-, Panel oder ein Anzeige-Panel mit organischen Licht emittierenden Dioden, OLED, ist.

5. Anzeige-Panel gemäß einem der Ansprüche 2 bis 4, wobei, falls das Anzeige-Panel zum Anzeigen verwendet wird, durch zwei benachbarte Datenleitungen bereitgestellte Spannungssignale entgegengesetzte Polaritäten aufweisen, sodass eine Spannung, die zwischen einer gemeinsamen Elektrode und einer Pixel-Elektrode gebildet ist eine entgegengesetzte Polarität zwischen zwei Sub-Pixeln in zwei benachbarten Zeilen und über derselben Datenleitung aufweist.

6. Verfahren zum Ansteuern des Pixel-Arrays gemäß Anspruch 1, wobei das Pixel-Array aufweist die Pixel-Einheiten als eine Vielzahl von realen Sub-Pixeleinheiten; wobei das Ansteuerverfahren aufweist:
S1: Unterteilen eines anzuzeigenden Bilds in eine Vielzahl von theoretischen Pixel-Einheiten, bei denen jede theoretische Pixel-Einheit aufweist drei theoretische Sub-Pixel unterschiedlicher Farbe und wobei die drei theoretischen Sub-Pixel jeweils ein theoretisches R-Sub-Pixel, ein theoretisches G-Sub-Pixel und ein theoretisches B-Sub-Pixel sind; und Berechnen eines theoretischen Helligkeitswerts jedes theoretischen Sub-Pixels;
S2: Berechnen tatsächlicher Helligkeitswerte der realen Sub-Pixel, bei denen ein Helligkeitswert eines zu berechnenden realen Sub-Pixel eine Summe ist aus wenigstens einem Teil eines theoretischen Helligkeitswerts eines theoretischen Sub-Pixel, entsprechend dem zu berechnenden realen Sub-Pixel, und eines Teils eines theoretischen Helligkeitswerts eines theoretischen Sub-Pixel, der wenigstens einem geteilten realen Sub-Pixel entspricht; wobei der geteilte reale Sub-Pixel dieselbe Farbe aufweist wie der zu berechnende reale Sub-Pixel; und eine Verbindungslinie des geteilten realen Sub-Pixel und des zu berechnenden realen Sub-Pixel nicht durch andere reale Sub-Pixel verläuft, die dieselbe Farbe wie der zu berechnende reale Sub-Pixel aufweisen; und
S3: Eingeben von Signalen in die realen Sub-Pixel, so dass die realen Sub-Pixel den tatsächlichen Helligkeitswert aufweisen, der im Schritt S2 berechnet wurde.

7. Verfahren zum Ansteuern des Pixel-Arrays gemäß Anspruch 6, wobei in dem Schritt S2, Verbinden von Linien eines Mittelpunkts des zu berechnenden realen Sub-Pixel und Mittelpunkten der geteilten realen Sub-Pixel, die den zu berechnenden realen Sub-Pixel entsprechen, kombiniert werden, um ein Parallelogramm zu binden.

## Revendications

1. Matrice de pixels, comprenant une pluralité de sous-pixels dont les points centraux sont agencés selon des rangées, dans laquelle la pluralité de sous-pixels comprend une pluralité de sous-pixels rouges, R, une pluralité de sous-pixels verts, G et une pluralité de sous-pixels bleus, B ;
dans laquelle les unités de pixel respectives incluent trois sous-pixels de différentes couleurs ; les trois sous-pixels sont respectivement un sous-pixel R, un sous-pixel G et un sous-pixel B ; dans chaque unité de pixel, un triangle est formé par des lignes de liaison qui relient les points centraux des trois sous-pixels ; chacun de la pluralité de sous-pixels présente une forme de croix qui est formée en apposant une croix sur des rectangles qui présentent un rapport longueur sur largeur de 3:1 respectivement dans une direction horizontale et dans une direction verticale ; et une longueur de la forme de croix dans la direction horizontale est égale à une longueur de la forme de croix dans la direction verticale ;
**caractérisée en ce que** :
une relation de positionnement mutuel entre les sous-pixels est définie comme suit :
par référence à un axe horizontal et à un axe vertical qui sont prévus sur un plan, des coordonnées horizontales x = R(1), R(2), R(3), ..., R(N) sont agencées de façon séquentielle de gauche à droite, des coordonnées verticales y = L(1), L(2), L(3), ..., L(n) sont agencées de façon séquentielle de haut en bas, une distance entre des coordonnées horizontales adjacentes est égale à une distance entre des coordonnées verticales adjacentes, les coordonnées horizontales des sous-pixels sont comme suit :
pour une L(1 + 5i₁)-ième rangée, les centres des sous-pixels sont disposés au niveau de positions dont les coordonnées horizontales sont R(4 + 5k₁), i₁ étant un entier non inférieur à zéro et k₁ étant un entier non inférieur à zéro ;
pour une L(2 + 5i₂)-ième rangée, les centres des sous-pixels sont disposés au niveau de positions dont les coordonnées horizontales sont R(2 + 5k₂), i₂ étant un entier non inférieur à zéro et k₂ étant un entier non inférieur à zéro ;
pour une L(3 + 5i₃)-ième rangée, les centres des sous-pixels sont disposés au niveau de positions dont les coordonnées horizontales sont R(5 + 5k₃), i₃ étant un entier non inférieur à zéro et k₃ étant un entier non inférieur à zéro ; et
pour une L(4 + 5i₄)-ième rangée, les centres des sous-pixels sont disposés au niveau de positions dont les coordonnées horizontales sont R(3 + 5k₄), i₄ étant un entier non inférieur à zéro et k₄ étant un entier non inférieur à zéro ;
pour une L(5 + 5i₅)-ième rangée, les centres des sous-pixels sont disposés au niveau de positions dont les coordonnées horizontales sont R(1 + 5k₅), i₅ étant un entier non inférieur à zéro et k₅ étant un entier non inférieur à zéro ; et
une période de sous-pixels est formée par cinq rangées consécutives de sous-pixels ; dans laquelle :
une première rangée de sous-pixels dans la période de sous-pixels inclut une pluralité de premières sous-périodes de sous-pixels ; chaque première sous-période de sous-pixels inclut un sous-pixel G, un sous-pixel B et un sous-pixel R qui sont agencés selon une séquence en partant de R(4 + i), i étant un entier non inférieur à zéro ;
une deuxième rangée de sous-pixels dans la période de sous-pixels inclut une pluralité de deuxièmes sous-périodes de sous-pixels ; chaque deuxième sous-période de sous-pixels inclut un sous-pixel R, un sous-pixel G et un sous-pixel B qui sont agencés selon une séquence en partant de R(2 + i) ;
une troisième rangée de sous-pixels dans la période de sous-pixels inclut une pluralité de troisièmes sous-périodes de sous-pixels ; chaque troisième sous-période de sous-pixels inclut un sous-pixel R, un sous-pixel G et un sous-pixel B qui sont agencés selon une séquence en partant de R(5 + i) ;
une quatrième rangée de sous-pixels dans la période de sous-pixels inclut une pluralité de quatrièmes sous-périodes de sous-pixels ; chaque quatrième sous-période de sous-pixels inclut un sous-pixel B, un sous-pixel R et un sous-pixel G qui sont agencés selon une séquence en partant de R(3 + i) ; et
une cinquième rangée de sous-pixels dans la période de sous-pixels inclut une pluralité de cinquièmes sous-périodes de sous-pixels ; chaque cinquième sous-période de sous-pixels inclut un sous-pixel G, un sous-pixel B et un sous-pixel R qui sont agencés selon une séquence en partant de R(1 + i).

2. Panneau d'affichage, comprenant : une matrice de pixels, une pluralité de lignes de données et une pluralité de lignes de grille, dans lequel la matrice de pixels est la matrice de pixels selon la revendication 1.

3. Panneau d'affichage selon la revendication 2, dans lequel deux colonnes de sous-pixels sont disposées au-dessus d'une ligne de données, dans lequel une colonne de sous-pixels se rapporte à des sous-pixels dont les points centraux sont disposés sur la même colonne.

4. Panneau d'affichage selon la revendication 2 ou 3, dans lequel le panneau d'affichage est un panneau d'affichage à cristaux liquides, LCD ou un panneau d'affichage à diodes émettrices de lumière organiques, OLED.

5. Panneau d'affichage selon l'une quelconque des revendications 2 à 4, dans lequel, dans un cas dans lequel le panneau d'affichage est utilisé pour un affichage, des signaux de tension qui sont fournis par deux lignes de données adjacentes présentent des polarités opposées, de telle sorte qu'une tension qui est formée entre une électrode commune et une électrode de pixel présente une polarité opposée entre deux sous-pixels dans deux rangées adjacentes et au-dessus de la même ligne de données.

6. Procédé pour piloter la matrice de pixels selon la revendication 1, dans lequel la matrice de pixels inclut les unités de pixel en tant que pluralité d'unités de sous-pixel réel ; dans lequel le procédé de pilotage comprend :
S1 : la division d'une image qui doit être affichée selon une pluralité d'unités de pixel théorique, dans lequel chaque unité de pixel théorique inclut trois sous-pixels théoriques de couleurs différentes, et les trois sous-pixels théoriques sont respectivement un sous-pixel R théorique, un sous-pixel G théorique et un sous-pixel B théorique ; et le calcul d'une valeur de luminosité théorique de chaque sous-pixel théorique ;
S2 : le calcul de valeurs de luminosité effectives des sous-pixels réels, dans lequel une valeur de luminosité d'un sous-pixel réel qui doit être calculé est une somme d'au moins une partie d'une valeur de luminosité théorique d'un sous-pixel théorique qui correspond au sous-pixel réel qui doit être calculé et d'une partie d'une valeur de luminosité théorique d'un sous-pixel théorique qui correspond à au moins un sous-pixel réel de partage ; le sous-pixel réel de partage présente la même couleur que le sous-pixel réel qui doit être calculé ; et une ligne de liaison qui relie le sous-pixel réel de partage et le sous-pixel réel qui doit être calculé ne passe pas par d'autres sous-pixels réels qui présentent la même couleur que le sous-pixel réel qui doit être calculé ; et
S3 : l'entrée de signaux à l'intérieur des sous-pixels réels, de telle sorte que les sous-pixels réels présentent la valeur de luminosité effective qui est calculée au niveau de l'étape S2.

7. Procédé pour piloter la matrice de pixels selon la revendication 6, dans lequel, au niveau de l'étape S2, les lignes de liaison qui relient un point central du sous-pixel réel qui doit être calculé et les points centraux des sous-pixels réels de partage qui correspondent au sous-pixel réel qui doit être calculé sont combinées pour former un parallélogramme.
